# EUROPÄISCHE PATENTSCHRIFT

(11) **EP 1 069 334 B1**
(45) Veröffentlichungstag und Bekanntmachung des Hinweises auf die Patenterteilung: **23.11.2005**
(21) Anmeldenummer: 99113483.4
(22) Anmeldetag: 13.07.1999
(51) Int. Cl.: F16D 65/095, F16D 55/22

(54) **Sicherungselement für Scheibenbremsklötze**
Retainer element for disc brake pads
Elément de retenue pour patins de frein à disque

(43) Veröffentlichungstag der Anmeldung: 17.01.2001
(73) Patentinhaber: BPW Bergische Achsen Kommanditgesellschaft, 51674 Wiehl (DE)
(72) Erfinder: Paech, Hartmut, Dipl.-Ing., 51545 Waldbröl (DE); Hamburger, Klaus, Dipl.-Ing., 51674 Wiehl (DE); Klaas, Thomas, 51580 Reichshof (DE)
(74) Vertreter: Christophersen, Ruth

(56) Entgegenhaltungen:
- EP-A- 0 665 386
- DE-A- 2 718 427
- DE-U- 29 802 031

## Beschreibung

Die Erfindung betrifft eine Scheibenbremse mit einer Bremsscheibe und einem gegenüber der Fahrzeugachse drehfesten Bremssattel, der über einen Teilumfang der Bremsscheibe mit einer Öffnung versehen ist, in die die Bremsbeläge von außen eingesetzt sind, wobei die Bremsbeläge mittels eines sich über die Öffnung erstreckenden Bügels gegen ein Herausfallen gehalten sind.

Eine solche Scheibenbremse ist aus den Gebrauchsmusterschriften DE 298 02 031 U1 und DE 94 06 166 U1 bekannt. Der Bügel, mittels dessen die Bremsbelagträger mit den daran befestigten Bremsbelägen in der Öffnung des Bremssattels gehalten werden, erstreckt sich mit seinem einen, der Fahrzeugmitte zugewandten Ende in einen Schlitz des Bremssattels, wohingegen das andere Ende des Bügels an einem Sicherungsbolzen befestigt ist, der sich quer zur Fahrzeugachse sowie zur Länge des Bügels erstreckt. Um die Bremsbelagträger mit den Bremsbelägen auszuwechseln, ist es zunächst erforderlich, den Sicherungsbolzen axial aus seiner Aufnahme in dem Bremssattel herauszuschlagen. Bei abgenommenem Fahrzeugrad bereitet dies keine Schwierigkeiten, da der Bremssattel einschließlich des Sicherungsbolzens dann von außen gut zugänglich ist. Bei moniertem Fahrzeugrad hingegen läßt sich der Sicherungsbolzen nur unter größten Schwierigkeiten unter Verwendung spezieller Werkzeuge entfernen, so daß sich der Belagwechsel nur unter erheblichen Schwierigkeiten durchführen läßt.

Zur Lösung dieses Problems findet sich in der EP 0 665 386 A1 der Vorschlag, den Sicherungsbolzen nicht außen sondern innen an den Bremssattel anzuordnen, wo er sich nahe der Öffnung der Radfelge befindet und daher gut erreichbar ist. Diese an und für sich praktikable Lösung läßt sich jedoch nicht bei allen Bremssattel-Typen realisieren.

Der Erfindung liegt daher die **Aufgabe** zugrunde, eine Scheibenbremse zu schaffen, die bei montiertem Fahrzeugrad einen erleichterten Belagwechsel zuläßt.

Zur **Lösung** wird bei einer Scheibenbremse der eingangs genannten Art vorgeschlagen, daß sich der Bügel aus zwei trennbaren und in Verlängerung zueinander angeordneten Bügelhälften zusammensetzt.

Ein solcher teilbarer Bügel bietet beim Austausch verschlissener Bremsbeläge große Vorteile und läßt einen problemlosen Belagwechsel auch bei montiertem Fahrzeugrad zu. Nach der Trennung der beiden während des Fahrzeugbetriebes verbundenen Bügelhälften lassen sich diese soweit von der Öffnung in dem Bremssattel entfernen, daß anschließend die Bremsbeläge mit den Bremsbelagträgern radial nach außen aus der Öffnung herausgezogen werden können. Dies kann bei montiertem Fahrzeugrad erfolgen. Infolge der Aufteilung des Bügels in zwei in Verlängerung zueinander angeordnete Teile liegt die Trennstelle in einem Bereich innerhalb der umgebenden Radfelge, der von Hand noch gut erreichbar ist, so daß sich die Trennung des Bügels ohne die Verwendung von Spezialwerkzeugen durchführen läßt.

Zur Erzielung einer hohen Stabilität des Bügels gegenüber Knickbelastungen wird mit einer Ausgestaltung vorgeschlagen, daß sich die beiden Bügelhälften auf einem gemeinsamen Längsabschnitt überlappen.

Zur Erzielung einer sicheren Verbindung der beiden Bügelhälften auch bei den im Fahrzeugbetrieb häufig auftretenden stoßartigen Belastungen, wird mit einer weiteren Ausgestaltung vorgeschlagen, daß die beiden Bügelhälften über mindestens ein Sicherungselement miteinander verbunden sind.

Mit einer weiteren Ausgestaltung wird eine formschlüssige Verbindung der beiden Bügelhälften angestrebt und hierzu vorgeschlagen, daß die eine Bügelhälfte mit einer Durchtrittsöffnung für eine an der anderen Bügelhälfte ausgebildete Lasche versehen ist, und daß das Sicherungselement an dem freien, aus der Durchtrittsöffnung heraustretenden Ende der Lasche festlegbar ist. Als Sicherungselement kann z. B. eine Schraubverbindung, vorzugsweise jedoch ein Splint zur Anwendung gelangen, vorzugsweise ein handelsüblicher Sicherungssplint.

Zum Auswechseln der Bremsbeläge bei montiertem Fahrzeugrad ist es, wie sich herausgestellt hat, nicht unbedingt erforderlich, daß beide Bügelhälften vollständig entfernt werden. Vielmehr reicht es aus, die mehr zum Fahrzeug hin angeordnete Bügelhälfte, die lediglich in einer Aussparung des Bremssattels steckt, zu entfernen und die andere, der Radaußenseite zugewandte Bügelhälfte soweit zu verschwenken, daß sich der darunter angeordnete Bremsbelag gut erreichen und aus der Öffnung des Bremssattels nach außen herausziehen läßt. Zur Erzielung dieser Schwenkbarkeit wird mit einer bevorzugten Ausgestaltung vorgeschlagen, daß das der Radaußenseite zugewandten Ende der weiter zur Radaußenseite hin angeordneten der beiden Bügelhälften schwenkbar an einem Bolzen gelagert ist, die sich quer zur Länge des Bügels erstreckt. Vorzugsweise ist die Bügelhälfte um die Achse herum bis in eine Lage schwenkbar, in der das, der Radaußenseite abgewandte Ende dieser Bügelhälfte an der inneren Mantelfläche der umgebenden Radfelge anliegt.

Auf der Zeichnung sind Auführungsbeispiele der erfindungsgemäßen Scheibenbremse dargestellt, und zwar zeigen:
- Fig. 1: einen Teilschnitt durch eine Scheibenbremse einschließlich der Radfelge des Fahrzeugrades;
- Fig. 2: die Gegenstände nach Fig. 1 während des Auswechselns der Bremsbeläge der Scheibenbremse;
- Fig. 3a: einen bei den Scheibenbremsen nach den Fign. 1 und 2 verwendeten Bügel in zusammengesetztem Zustand;
- Fig. 3b: den Bügel nach Fig. 3a in getrenntem Zustand;
- Fig. 4a: einen Bügel in einer anderen Ausführungsform und in zusammengesetztem Zustand und
- Fig. 4b: den Bügel nach Fig. 4a in getrenntem Zustand.

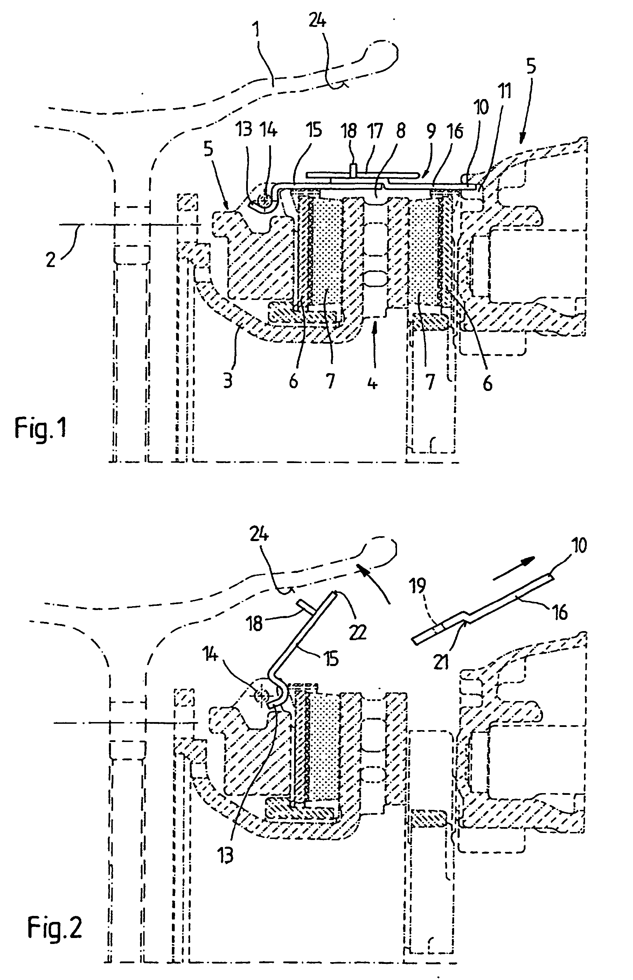

Die Fign. 1 und 2 zeigen eine Scheibenbremse, wobei jedoch aus Gründen der Übersicht Achsen und Nabe des Fahrzeugrades nicht dargestellt sind. Dargestellt ist jedoch die Radfelge 1, an der mittels angedeuteter Schraubbolzen 2 ein Bremsscheibentopf 3 befestigt ist. An seinem inneren, dem Fahrzeug zugewandten Ende geht der Bremsscheibentopf 3 in die beim Ausführungsbeispiel innen belüftete Bremsscheibe 4 der Scheibenbremse über.

Drehfest mit der nicht dargestellten Fahrzeugachse verbunden ist der Bremssattel 5 der Scheibenbremse. Dieser übergreift in bekannter Weise die Bremsscheibe 4 auf einem Teilumfang. Der Bremssattel 5 kann sowohl als Festsattel, als auch als sogenannter schwimmender Sattel ausgebildet sein. Beim Ausführungsbeispiel ist der Bremssattel 5 ein schwimmender Sattel, der mittels geeigneter Axialführungen verschiebbar an der Fahrzeugachse gelagert ist.

In dem die Bremsscheibe 4 beiderseits umgreifenden Bremssattel 5 sind auf Bremsbelagträgern 6 die Bremsbeläge 7 angeordnet. In dem der Fahrzeugmitte zugewandten Teil des Bremssattels 5 befindet sich ein pneumatischer Druckmittelzylinder, welcher den Bremsdruck auf den zur Fahrzeugmitte hin gelegenen Bremsbelagträger 6 ausübt. Die Reaktionskraft führt zur gleichzeitigen Anpressung des gegenüberliegenden, außen liegenden Bremsbelagträgers 6 mit Bremsbelag 7 gegen die zwischen den Bremsbelägen angeordnete Bremsscheibe 4.

Bremsbelagträger 6 und Bremsbeläge 7 befinden sich in einer Öffnung 8 des Bremssattels, die sich über einen Teilumfang der Bremsscheibe 4 erstreckt. Das Auswechseln der Bremsbelagträger 6 mit den Bremsbelägen 7 erfolgt, indem diese aus der Öffnung 8 nach außen, d. h. radial in Bezug auf die Bremsscheibe 4 herausgezogen werden. Hierzu ist jedoch zunächst ein als Bremsbelaghaltebügel dienender Bügel 9 zu entfernen, der sich parallel zu der jeweiligen Achse des Fahrzeuges über die Öffnung 8 erstreckt und die Bremsbeläge gegen ein Herausfallen sichert.

In montiertem Zustand, der in Fig. 1 dargestellt ist, sind beide Enden des Bügels 9 formschlüssig festgelegt. Das innere, zur Fahrzeugmitte hin weisende Ende 10 des Bügels sitzt in einer nach Art eines Hinterschnittes gestalteten Aussparung 11 des Bremssattels 5, wohingegen das äußere, der Radaußenseite zugewandte Ende des Bügels 9 mittels eines hakenförmigen Endes 13 einen Bolzen 14 umgreift, der Bestandteil des Bremssattels 5 ist und sich quer sowohl zur Länge des Bügels 9, als auch zur Radachse erstreckt. Der Bolzen 14 befindet sich also in dem der Radaußenseite zugewandten Teil des Bremssattels, und die Aussparung 10 in dem der Fahrzeugmitte zugewandten Teil des Bremssattels 5.

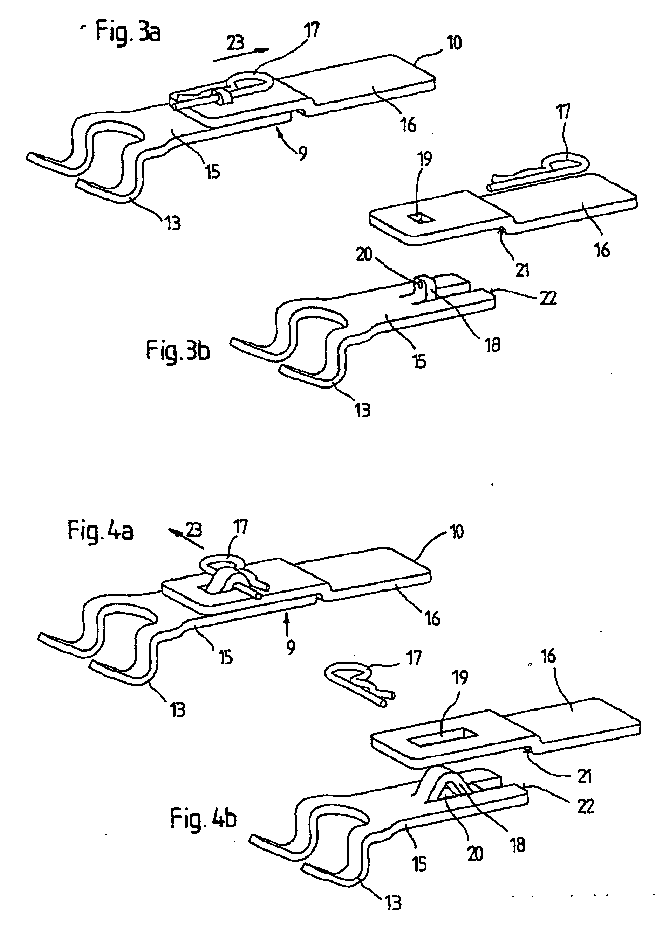

Die Fign. 3a und 3b lassen erkennen, daß sich der Bügel 9 aus zwei teilweise überlappenden Bügelhälften 15, 16 zusammensetzt. Die Bügelhälften 15, 16 können gleich lang, aber auch unterschiedlich lang ausgebildet sein. Entscheidend ist die Teilbarkeit des Bügels 9. Zur Verbindung der beiden Bügelhälften 15, 16 ist als Sicherungselement ein Splint 17 vorgesehen, der sich durch eine Lasche 18 der einen Bügelhälfte 15 hindurchstecken läßt, wobei diese Lasche 18 eine Durchtrittsöffnung 19 der anderen Bügelhälfte 16 durchragt, so daß nur noch eine am Ende der Lasche 18 ausgebildete Bohrung 20 zur Hindurchführung des Splintes 17 bleibt. Die Bügelhälfte 16 ist mit einer Stufe 21 versehen, gegen die sich das innere Ende 22 der anderen Bügelhälfte 15 anlegen kann. Hierdurch wird verhindert, daß sich die beiden Bügelhälften 15, 16 zueinander verdrehen können. Hierzu trägt ebenso bei, daß die Gestalt der Durchtrittsöffnung 19 der Bügelhälfte 16 mit nur geringem Spiel an die Form der Lasche 18 der anderen Bügelhälfte 15 angepaßt ist. Beide Bügelhälften 15, 16 lassen sich, wie die Fign. 3a und 3b gut erkennen lassen, preiswert aus flachem Stahlblech durch Stanzen und Biegen herstellen.

Zum Trennen der Bügelhälften wird der Splint 17 in der in Fig. 3a eingezeichneten Pfeilrichtung 23 gezogen. Sodann lassen sich die beiden Bügelhälften 15, 16 gemeinsam nach außen hin aufschwenken, wobei die äußere Bügelhälfte 15 um den Bolzen 14, und die innere Bügelhälfte 16 um den Rand der Aussparung 11 herum schwenken kann. In dieser leicht verschwenkten Stellung beider Bügelhälften 15, 16 läßt sich dann die innere Bügelhälfte 16 ganz entfernen, indem deren innenliegendes Ende 10 aus der Aussparung 11 des Bremssattels herausgezogen wird.

Dieses Stadium der Demontage ist in Fig. 2 dargestellt. Ein vollständiges Entnehmen auch der äußeren Bügelhälfte 15 ist nicht erforderlich. Vielmehr kann diese um den als Achse dienenden Bolzen 14 herum bis in eine Lage verschwenkt werden, in der das der Fahrzeugmitte zugewandte Ende dieser Bügelhälfte 15 an der inneren Mantelfläche 24 der umgebenden Radfelge 1 anliegt. Es ist nun genügend Platz, um sowohl die inneren als auch die äußeren Bremsbeläge auszuwechseln, und zwar bei montierter Radfelge, wie in den Fign. 1 und 2 dargestellt. Der für das Herausnehmen und Auswechseln des inneren Bremsbelages 7 benötigte Platz wird durch Entfernen der inneren Bügelhälfte 16 geschaffen, der für das Herausnehmen und Auswechseln des äußeren Bremsbelages erforderliche Platz durch das in Fig. 2 dargestellte Verschwenken der äußeren Bügelhälfte 15. Alternativ kann auch vorgesehen sein, die äußere Bügelhälfte 15 vor dem Auswechseln des darunter angeordneten Bremsbelages 7 ganz zu entfernen, indem das hakenförmige Ende 13 der Bügelhälfte 15 unter dem Bolzen 14 herausgezogen wird.

In den Fign. 4a und 4b ist eine alternative Gestaltung des Belaghaltebügels dargestellt. Die Lasche wird durch V-förmiges Verbiegen eines Mittelabschnittes der Bügelhälfte 15 erzeugt. Der Splint 17 wird nicht in Längsrichtung des Bügels, wie bei der Ausführungsform nach den Fign. 3a und 3b, sondern quer hierzu eingeführt. Ansonsten entsprechen Aufbau und Montage der voranstehend anhand der Fign. 1 bis 3b erläuterten Ausführungsform.

### Bezugszeichenliste

- 1: Radfelge
- 2: Radbolzen
- 3: Bremsscheibentopf
- 4: Bremsscheibe
- 5: Bremssattel
- 6: Bremsbelagträger
- 7: Bremsbelag
- 8: Öffnung
- 9: Bügel
- 10: inneres Ende des Bügels
- 11: Aussparung
- 13: hakenförmiges Ende
- 14: Bolzen
- 15: äußere Bügelhälfte
- 16: innere Bügelhälfte
- 17: Splint
- 18: Lasche
- 19: Durchtrittsöffnung
- 20: Bohrung
- 21: Stufe
- 22: inneres Ende
- 23: Pfeilrichtung
- 24: innere Mantelfläche der Radfelge

## Patentansprüche

1. Scheibenbremse mit einer Bremsscheibe (4) und einem gegenüber der Radachse drehfestem Bremssattel (5), der über einen Teilumfang der Bremsscheibe (4) mit einer Öffnung (8) versehen ist, in die die Bremsbeläge (7) von außen eingesetzt sind, wobei die Bremsbeläge (7) mittels eines sich über die Öffnung (8) erstreckenden Bügels (9) gegen ein Herausfallen gehalten sind,
**dadurch gekennzeichnet,**
**daß** sich der Bügel (9) aus zwei trennbaren und in Verlängerung zueinander angeordneten Bügelhälften (15, 16) zusammensetzt.

2. Scheibenbremse nach Anspruch 1, **dadurch gekennzeichnet, daß** sich die beiden Bügelhälften (15, 16) auf einem gemeinsamen Längsabschnitt überlappen.

3. Scheibenbremse nach Anspruch 1 oder Anspruch 2, **dadurch gekennzeichnet, daß** die beiden Bügelhälften (15, 16) über mindestens ein Sicherungselement (17) miteinander verbunden sind.

4. Scheibenbremse nach Anspruch 1 oder 2, **dadurch gekennzeichnet, daß** die eine Bügelhälfte (16) mit einer Durchtrittsöffnung (19) für eine an der anderen Bügelhälfte (15) ausgebildete Lasche (18) versehen ist, und daß ein Sicherungselement (17) an dem freien, aus der Durchtrittsöffnung (19) heraustretenden Ende der Lasche (18) festlegbar ist.

5. Scheibenbremse nach Anspruch 3 oder Anspruch 4, **gekennzeichnet durch** einen Splint (17) als Sicherungselement.

6. Scheibenbremse nach einem der vorangehenden Ansprüche, **dadurch gekennzeichnet, daß** das der Radaußenseite zugewandte Ende (13) der weiter zur Radaußenseite hin angeordneten der beiden Bügelhälften schwenkbar an einem Bolzen (14) gelagert ist, der sich quer zur Länge des Bügels (9) erstreckt.

7. Anordnung einer Scheibenbremse nach einem der vorhergehenden Ansprüche, **dadurch gekennzeichnet, daß** die Bügelhälfte (15) mit einem der Radaußenseite zugewandten Ende (13) um einen Bolzen (14) herum bis in eine Lage schwenkbar ist, in der das andere, der Radaußenseite abgewandte Ende (22) dieser Bügelhälfte (15) an der inneren Mantelfläche (24) der umgebenden Radfelge (1) anliegt.

## Claims

1. Disc brake comprising a brake disc (4) and a brake caliper (5) which is secured against rotation with respect to the wheel axle and is provided with an opening (8) over part of the circumference of the brake disc (4), into which opening the brake linings (7) are inserted from outside, wherein the brake linings (7) are held, so as to prevent them from falling out, by a fastener (9) which extends over the opening (8), **characterized in that** the fastener (9) is composed of two separable fastener halves (15, 16) which are arranged in the extension of one another.

2. Disc brake according to Claim 1, **characterized in that** the two fastener halves (15, 16) overlap one another over a common longitudinal portion.

3. Disc brake according to Claim 1 or Claim 2, **characterized in that** the two fastener halves (15, 16) are connected to one another via at least one securing element (17).

4. Disc brake according to Claim 1 or 2, **characterized in that** one fastener half (16) is provided with a through-opening (19) for a lug (18) formed on the other fastener half (15), and **in that** a securing element (17) can be fixed to the free end of the lug (18) which emerges from the through-opening (19).

5. Disc brake according to Claim 3 or Claim 4, **characterized by** a cotter pin (17) as the securing element.

6. Disc brake according to any of the preceding claims, **characterized in that** the fastener half arranged closer to the outside of the wheel has its end (13) which faces the outside of the wheel mounted pivotably on a bolt (14), said bolt extending transversely to the length of the fastener (9) .

7. Arrangement of a disc brake according to any of the preceding claims, **characterized in that** the fastener half (15) can be pivoted by one end (13) which faces the outside of the wheel around a bolt (14) until it reaches a position in which the other end (22) of this fastener half (15) which faces away from the outside of the wheel bears against the inner surface (24) of the surrounding wheel rim (1) .

## Revendications

1. Frein à disque avec un disque de frein (4) et un étrier de frein (5) solidaire en rotation par rapport à l'axe de roue, qui est pourvu sur un pourtour partiel du disque de frein (4) d'une ouverture (8) dans laquelle les garnitures de frein (7) sont insérées par l'extérieur, les garnitures de frein (7) étant maintenues au moyen d'un étrier (9) s'étendant au-dessus de l'ouverture (8) contre le risque d'une chute,
**caractérisé en ce que**
l'étrier (9) se compose de deux moitiés d'étrier (15, 16) pouvant être séparées et disposées dans le prolongement l'une de l'autre.

2. Frein à disque selon la revendication 1, **caractérisé en ce que** les deux moitiés d'étrier (15, 16) se chevauchent sur une partie longitudinale commune.

3. Frein à disque selon la revendication 1 ou la revendication 2, **caractérisé en ce que** les deux moitiés d'étrier (15, 16) sont reliées entre elles au moyen d'au moins un élément de blocage (17).

4. Frein à disque selon la revendication 1 ou 2, **caractérisé en ce qu'**une moitié d'étrier (16) est dotée d'une ouverture de passage (19) pour une patte (18) formée sur l'autre moitié d'étrier (15) et **en ce qu'**un élément de blocage (17) peut être fixé sur l'extrémité, libre et sortant de l'ouverture de passage (19), de la patte (18).

5. Frein à disque selon la revendication 3 ou la revendication 4, **caractérisé par** une goupille fendue (17) comme élément de blocage.

6. Frein à disque selon l'une des revendications précédentes, **caractérisé en ce que** l'extrémité (13), tournée vers le côté extérieur de la roue, de la moitié d'étrier disposée davantage en direction de l'extérieur de la roue, des deux moitiés d'étrier, est montée de façon pivotante sur un boulon (14) qui s'étend transversalement à la longueur de l'étrier (9).

7. Agencement d'un frein à disque selon l'une des revendications précédentes, **caractérisé en ce que** la moitié d'étrier (15) peut pivoter avec une extrémité (13) tournée vers le côté extérieur de la roue autour d'un boulon (14) jusque dans une position dans laquelle l'autre extrémité (22), opposée au côté extérieur de roue, de cette moitié d'étrier (15) s'appuie sur la surface d'enveloppe (24) intérieure de la jante de roue (1) environnante.
